# EUROPÄISCHE PATENTSCHRIFT

(11) **EP 4 262 616 B1**
(45) Veröffentlichungstag und Bekanntmachung des Hinweises auf die Patenterteilung: **20.05.2026**
(21) Anmeldenummer: 21819456.1
(22) Anmeldetag: 26.11.2021
(51) Int. Cl.: A61C 8/00, A61C 9/00

(54) **AUSRICHTUNGSHILFSKÖRPER, DESSEN VERWENDUNG, CAD-DATENSATZ UND DENTALSCANNER**
ORIENTATION AID, USE THEREOF, CAD DATA SET, AND DENTAL SCANNER
AIDE À L'ORIENTATION, SON UTILISATION, ENSEMBLE DE DONNÉES CAD ET SCANNER DENTAIRE

(30) Priorität: 18.12.2020 DE 102020134266
(43) Veröffentlichungstag der Anmeldung: 25.10.2023
(73) Patentinhaber: Dental Direkt GmbH, 32139 Spenge (DE)
(72) Erfinder: KLEINGÖDINGHAUS, Sebastian, 49324 Melle (DE); MÄDER, Genephe, 33739 Bielefeld (DE); VOSS, Christina, 33613 Bielefeld (DE)
(74) Vertreter: VKK Patentanwälte PartG mbB
(86) Internationale Anmeldenummer: PCT/EP2021/083152
(87) Internationale Veröffentlichungsnummer: WO 2022/128407

(56) Entgegenhaltungen:
- EP-A1- 2 676 630
- EP-A1- 2 865 352
- EP-A1- 2 865 352
- WO-A1-2012/126475

## Beschreibung

Die vorliegende Erfindung betrifft einen Ausrichtungshilfskörper zur, vorzugsweise berührungslosen und/oder taktilen, Erfassung einer Lage und Angulation eines in einem Patientenkiefer implantierten Zahnimplantats und/oder eines in einem Modell eingebauten Modellanalogs, umfassend ein Verbindungsteil mit einer Schnittstelle zum geometrisch definierten Verbinden mit dem Zahnimplantat und ein mit einem koronalen Ende des Verbindungsteils geometrisch definiert verbundenes Erfassungsteil zum Hervorstehen in einer koronalen Erstreckungsrichtung über das Zahnimplantat, wobei das Erfassungsteil an dessen koronalem Ende eine plane Deckelfläche und mindestens eine zu der Deckelfläche geneigt angeordnete plane Erfassungsfläche aufweist.

Gleichermaßen betrifft die vorliegende Erfindung eine Verwendung eines Ausrichtungshilfskörpers der vorgenannten Art in einem Verfahren zur Erfassung, vorzugsweise mittels eines berührungslosen und/oder taktilen Bildverarbeitungsverfahrens, einer Lage und Angulation eines in einem Patientenkiefer implantierten Zahnimplantats und/oder eines in einem Modell eingebauten Modellanalogs.

Weiter betrifft die vorliegende Erfindung einen CAD-Datensatz zur Kennzeichnung eines Ausrichtungshilfskörpers der eingangs genannten Art.

Gleichermaßen betrifft die vorliegende Erfindung einen Dentalscanner zur digitalen Form-, Lage- und Ausrichtungsdatenerfassung im zahnmedizinischen Bereich, mit wenigstens einem Handgerät, das zum Erfassen von digitalen Formdaten mindestens eines an einem in einem Patientenkiefer implantierten Zahnimplantat (207) und/oder an einem in einem Modell eingebauten Modellanalog befestigten Ausrichtungshilfskörpers mittels Handhabung durch einen Bediener ausgebildet ist, einem elektronischen Auswertemodul, das mit dem wenigstens einen Handgerät verbunden und zum Erzeugen eines digitalen Form-, Lage- und Ausrichtungsdatenmodells basierend auf den erfassten digitalen Form-, Lage- und Ausrichtungsdaten des mindestens einen Ausrichtungshilfskörpers eingerichtet ist, wobei eine Datenspeichereinrichtung, in welcher mindestens ein CAD-Datensatz zur Kennzeichnung des Ausrichtungshilfskörpers abgelegt ist, sowie Datenverarbeitungsmittel zum Abgleichen der erfassten Formdaten mit CAD-Datensatz vorgesehen sind, um die Lage und Angulation des Zahnimplantats in dem Patientenkiefer und/oder des Modellanalogs in dem Modell zu bestimmen. Gattungsgemäße Dentalscanner können sowohl als Tischgeräte zur Verwendung mit in einem Gipsmodell eingebauten Modellanalogen als auch als Intraoralscanner ausgestaltet sein. Die Erfassung erfolgt bei manchen Geräten berührungslos, insbesondere optisch, bei anderen Geräten taktil mit einer Abtastnadel.

Ausrichtungshilfskörper der eingangs genannten Art werden in der modernen Zahnimplantologie seit längerem als Hilfsmittel eingesetzt, um sicherzustellen, dass der zu ersetzende Zahn bzw. der zu ersetzende Aufbau so ausgerichtet und ausmoduliert wird, dass er möglichst naturgetreu mit den benachbarten Zähnen und dem Antagonisten zusammenwirken kann und auf diese Weise Kräfte auf Implantat und Knochen überträgt. Dazu ist es unter anderem entscheidend, die Lage und Angulation des Implantats im Kiefer exakt zu bestimmen, um einerseits die Zahnersatzlage im Mundraum den tatsächlichen anatomischen Verhältnissen exakt anzupassen und andererseits die an dem Modell bestehende Geometrie den tatsächlichen anatomischen Verhältnissen exakt anpassen zu können. Die Schwierigkeit ist dabei, dass das Zahnimplantat im Wesentlichen vollständig im Kieferknochen versenkt ist. Es ist daher einer direkten Erfassung hinsichtlich Lage und Angulation nicht zugänglich. Entsprechendes gilt für ein Modellanalog, welches in einem Modell eingebaut ist. In beiden Fällen helfen gattungsgemäße Ausrichtungshilfskörper bei der Ermittlung der Lage und Angulation des Zahnimplantats im Patientenkiefer bzw. des Modellanalogs im Modell.

Zu diesem Zweck werden Ausrichtungshilfskörper der eingangs genannten Art mit dem Implantat bzw. mit dem Modellanalog in geometrisch definierter Weise, d.h. mit feststehender Lage und Angulation, verbunden. Dabei bezeichnet die Lage die Position in den drei Raumrichtungen. Die Angulation bezeichnet die Winkelorientierung hinsichtlich Azimut und Elevation. Dabei hat das Implantat bzw. das Modelanalog bevorzugt die gleiche Neigung wie auch der Ausrichtungshilfskörper. In diesem Fall ist das Modellanalog im gleichen Winkel zum Modell hin anguliert wie der Ausrichtungshilfskörper bzw. ist das Implantat im gleichen Winkel zum Kiefer anguliert wie der Ausrichtungshilfskörper.

Die Schnittstelle des Verbindungsteils ist dabei passend für das verwendete Zahnimplantat konfektioniert. Sie kann für auf dem Markt erhältliche Implantate konfektioniert sein. Insbesondere kann die Schnittstelle des Verbindungsteils unabhängig von dem Erfassungsteil gestaltet sein.

Im Grundaufbau besteht ein gattungsgemäßer Ausrichtungshilfskörper aus einer Schnittstelle bzw. Interface, welche später im Implantat bzw. im Modellanalog im Kiefer oder Modell sitzt und dem Erfassungsteil, welches sich außerhalb des Kiefers bzw. außerhalb des Modells befindet und vom Scanner erfasst wird. Je nachdem, ob beim Zahnarzt oder im Labor gearbeitet wird, wird ein gattungsgemäßer Ausrichtungshilfskörper im Patientenkiefer oder auf einem Gipsmodell im Dentallabor eingesetzt.

Um eine präzise Überlagerung von mittels eines Dentalscanners der eingangs genannten Art erfassten Scandaten und zuvor in einer Bibliothek abgelegten CAD-Daten zu unterschiedlichen Ausrichtungshilfskörpern zu erhalten, ist es wichtig, dass das Erfassungsteil des Ausrichtungshilfskörpers eine möglichst große scanfähige Fläche aufweist, damit die Überlagerung präzise durchgeführt werden kann. Um die richtige Position hinsichtlich Lage, Angulation und Höhe des Implantats im Mund oder auf dem Modell zu bestimmen, muss eine eindeutige Position anhand der Form des Ausrichtungshilfskörpers erkennbar sein. Dies wird im Stand der Technik über eine gerade Fläche oder eine abstrakte Form ermöglicht. Die Form muss für eine eindeutige Lage und Orientierung eine markante Fläche aufweisen, welche nur einmal am Erfassungsteil des gattungsgemäßen Ausrichtungshilfskörpers vorhanden ist. Im Stand der Technik gibt es beispielsweise zylindrische Formen mit einer geraden Fläche, die zwar einen geringen Durchmesser, dabei jedoch auch eine geringere Deckelfläche aufweisen. Ferner sind im Stand der Technik trapezförmige Erfassungsteile bekannt. Diese zeichnen sich zwar durch eine große Deckelfläche aus. Jedoch weisen sie insgesamt eine große Bauform auf und auf Grund des mangelnden Platzangebotes im Patientenmund schwer oder nicht optimal scanbar.

Auf diese Weise ermöglichen gattungsgemäße Ausrichtungshilfskörper anhand deren Erfassungsteil die berührungslose und/oder taktile Erfassung, in der Regel mit einem Dentalscanner der eingangs genannten Art. Dazu werden im Stand der Technik in den bekannten Dentalscannern in einer Bibliothek unterschiedliche Ausrichtungshilfskörper mit CAD-Datensätzen hinterlegt. Nach dem Erfassen der digitalen Daten im Mundraummodell werden diese durch Abgleich mit CAD-Datensätzen in der Bibliothek mit einem vorgegebenen CAD-Datensatz aus der Bibliothek identifiziert. Die Daten zu Lage und Angulation werden mit geometrischen Bildverarbeitungsmethoden anhand von Flächen auf dem Erfassungsteil ermittelt.

Beispielsweise ist aus der DE 10 2009 014 013 B4 ein Erfassungshilfskörper zur Erfassung der Lage und Angulation eines Implantats bekannt, bei dem ein Erfassungsteil eine erste plane Erfassungsfläche aufweist, deren Flächennormale senkrecht zur Erstreckungsrichtung des Erfassungsabschnitts liegt und eine gekrümmte Erfassungsfläche aufweist, die als verrundete Übergangsfläche zwischen zumindest einem Umfangsabschnitt eines zylindrischen Außenflächenanteils und eines stirnseitigen Endes ausgebildet ist, das an dem Aufnahmeabschnitt gegenüberliegenden Ende des Erfassungshilfskörpers liegt.

Gemäß einer bekannten Weiterentwicklung gemäß dem Stand der Technik ist aus der EP 2 685 928 B1 ein gattungsgemäßer Ausrichtungshilfskörper vorbekannt, dessen Erfassungsteil ein vom optischen Scansystem erkennbares geometrisches Merkmal, nämlich einen durch optisches Scannen erkennbaren Abschnitt in Bezug zu einer Winkelposition aufweist, indem er eine planare erste Fläche zu der Längsachse des Scankörperelements aufweist. Die Erkennbarkeit durch optisches Scannen wird bei diesem vorbekannten Ausrichtungskörper dadurch begünstigt, dass die planare Fläche gegenüber der Längsachse des Erfassungsteils geneigt ist.

Die EP 2 865 352 A1 und WO 2012/126475 A1 machen andere gattungsgemäße Ausrichtungshilfskörper vorbekannt.

Nachteilig an den vorbekannten gattungsgemäßen Ausrichtungshilfskörper ist, dass diese bei bestimmten Implantatlagen und - Angulation en vergleichsweise viele Scanartefakte produzieren und bei stark geneigten Implantaten schwierig am Implantat zu befestigen sind.

Der Erfindung liegt vor dem geschilderten Hintergrund die Aufgabe zugrunde, einen Ausrichtungshilfskörper der eingangs genannten Art anzugeben, welcher auch bei ungünstigen Implantatlagen und - angulationen bzw. bei ungünstigen Modellanaloglagen und -angulationen vergleichsweise wenige Scanartefakte produziert und welcher auch bei stark geneigten Implantaten bzw. stark geneigten Modellanalogen bequem am Implantat bzw. am Modellanalog zu befestigen ist.

Ferner ist die der Erfindung zu Grunde liegende Aufgabe auch auf eine Verwendung eines Ausrichtungshilfskörpers der vorgenannten Art unter Umgehung der Nachteile des Standes der Technik gerichtet.

Der Erfindung liegt gleichermaßen die Aufgabe zu Grunde, einen CAD-Datensatz zur Kennzeichnung eines derartigen Ausrichtungshilfskörpers anzugeben, welcher auch bei ungünstiger Implantatlage und -angulation bzw. bei ungünstiger Modellanaloglage und -angulation eine Erfassung mit weniger Scanartefakten ermöglicht und leichter am Implantat befestigbar ist.

Schließlich liegt der vorliegenden Erfindung die Aufgabe zu Grunde, einen Dentalscanner der eingangs genannten Art anzugeben, welcher auch in Verbindung mit ungünstig ausgerichteten Implantaten bei der Zahnimplantologie zu verbesserten Ergebnissen führt.

Die auf einen gattungsgemäßen Ausrichtungshilfskörper gerichtete Aufgabe wird mit einem gattungsgemäßen Ausrichtungshilfskörper mit den Merkmalen des Patentanspruchs 1 gelöst, bei dem eine in der Erstreckungsrichtung verlaufende zentrale Längsachse des Erfassungsteils außerhalb der Deckelfläche verläuft. Durch die erfindungsgemäße Anordnung der Erfassungsfläche relativ zu der Deckelfläche wird mit Vorteil die Erkennbarkeit des Erfassungsteils gegenüber vorbekannten Ausrichtungshilfskörpern verbessert. Denn durch die gegenüber vorbekannten Ausrichtungshilfskörpern vergrößerte geneigte Erfassungsfläche steht gleichzeitig eine vergleichsweise große Deckelfläche zur Verfügung. Denn bei Projektion in Richtung der zentralen Längsachse des Erfassungsteils steht auch die geneigte Erfassungsfläche unvermindert zur Verfügung. Dadurch, dass die Erfassungsfläche die Deckelfläche bei oder jenseits der zentralen Längsachse des Erfassungsteils schneidet, steht eine für die Zwecke der optischen und/oder taktilen Erfassung gegenüber vorbekannten Ausgestaltungen vergrößerte Erfassungsfläche zur Verfügung, zumal auf der Erfassungsfläche aufgrund der Neigung jeder Punkt eine eindeutige Lage und Höheninformation hat.

Dadurch, dass bei dem erfindungsgemäßen Ausrichtungshilfskörper das Erfassungsteil eine zu der zentralen Längsachse konzentrisch verlaufende, die Deckelfläche durchdringende Innenbohrung zum Durchführen von Mitteln zur Befestigung des Ausrichtungshilfskörpers an dem Zahnimplantat aufweist, führt die erfindungsgemäße Ausgestaltung und Orientierung der Erfassungsfläche dazu, dass die Innenbohrung am koronalen Ende des Erfassungsteils in radialer Richtung, d.h. quer zur Längsachse, geöffnet ist. Bei Ausgestaltung der Innenbohrung als Schraubenkanal zur Verschraubung des Ausrichtungshilfskörpers mit dem Zahnimplantat kann gemäß dieser Ausgestaltung der Erfindung ein Schraubenzieher mit Vorteil seitlich angesetzt werden. Das Einsetzen des Ausrichtungshilfskörpers im Modell oder Mundraum gestaltet sich bei ungünstig ausgerichteten Zahnimplantaten auf diese Weise besonders bequem.

In vorteilhafter Ausgestaltung des erfindungsgemäßen Ausrichtungshilfskörpers weist das Erfassungsteil eine im Wesentlichen zylindrische Grundform auf. Dadurch ergibt sich erfindungsgemäß der Vorteil, dass die für die präzise Überlagerung von Scandaten und in einer Bibliothek abgelegten CAD-Daten entscheidenden scanfähigen Flächen sich gut von der zylindrischen Mantelfläche abheben. Außerdem ist die zylindrische Grundform besonders gut geeignet, um zwischen benachbarten Zähnen eingebracht zu werden.

Bei dem erfindungsgemäßen Ausrichtungshilfskörpers beträgt der Winkel zwischen der Deckelfläche und der Erfassungsfläche von 20° bis 30°, insbesondere 25°. Es hat sich erfindungsgemäß bei diesen Winkeln gezeigt, dass sich ein Optimum hinsichtlich einer möglichst scanartefaktfreien Erkennbarkeit und einer komfortablen Einbaubarkeit bei geneigt liegenden Zahnimplantaten ergibt. Die genannten Winkel zwischen der Deckelfläche und der Erfassungsfläche haben sich zudem als ein Optimum hinsichtlich der Einpassbarkeit des Ausrichtungshilfskörpers erwiesen, wenn das Zahnimplantat geneigt im Modell oder im Kiefer eingesetzt ist.

Die Erfindung sieht vor, dass die geneigte Erfassungsfläche in axialer Richtung zwei Drittel der Länge des Erfassungsteils erfasst.

In weiterer vorteilhafter Ausgestaltung des erfindungsgemäßen Ausrichtungshilfskörpers ist das Verbindungsteil integral mit dem Erfassungsteil ausgeformt. Der Ausrichtungshilfskörper kann somit mit Vorteil insgesamt einteilig aus einem einzigen Material gefertigt sein.

Gleichermaßen kann im Rahmen der Erfindung das Verbindungsteil separat von dem Erfassungsteil gebildet sein. Der Ausrichtungshilfskörper ist dann mehrteilig aufgebaut. Dies eröffnet die Möglichkeit, das Verbindungsteil und das Erfassungsteil in unterschiedlichen Materialien zu fertigen. Zur Verbindung des Verbindungsteils mit dem Erfassungsteil können im Rahmen der Erfindung press-fit Verbindungen oder Verklebungen oder Verschraubungen gewählt werden. Bei der mehrteiligen Ausgestaltung eines erfindungsgemäßen Ausrichtungshilfskörpers kann sich die Logistik günstig gestalten. Denn ein gegebenes Erfassungsteil kann mit einer Vielzahl von Verbindungsteilen zusammengefügt werden, um das Erfassungsteil mit verschiedenen Zahnimplantaten kompatibel zu machen.

Wenn in vorteilhafter Ausgestaltung des erfindungsgemäßen Ausrichtungshilfskörpers das Erfassungsteil aus einem anderen Werkstoff hergestellt ist als das Verbindungsteil, kann sowohl für das Erfassungsteil als auch für das Verbindungsteil jeweils ein besonders geeigneter, gegebenenfalls unterschiedlicher, Werkstoff gewählt werden.

In bevorzugter Ausgestaltung des erfindungsgemäßen Ausrichtungshilfskörpers ist das Erfassungsteil und/oder das Verbindungsteil aus einem, insbesondere metallischen und/oder polymeren, fräsbaren oder druckbaren Werkstoff hergestellt. Im Rahmen der Erfindung haben sich sowohl für das Erfassungsteil als auch für das Verbindungsteil, in unterschiedlichen Kombinationen, Titan, CoCr, PEEK als besonders gut geeignet erwiesen. Dabei zeichnet sich Titan und PEEK als Werkstoff für das Erfassungsteil und/oder das Verbindungsteil durch seine exzellente Biokompatibilität und seine Röntgenfähigkeit aus. Kobaltchrom (CoCr) ist besonders biokompatibel. Bei der Materialwahl für das Erfassungsteil ist im Rahmen der Erfindung zu berücksichtigen, dass dessen Oberfläche matt bzw. opak sein sollte. Der Vorteil ist, dass eine übermäßige Reflexion vermieden wird. Dazu müssen metallische Oberflächen im Rahmen der Erfindung behandelt werden. Dies kann im Vorfeld oder im Nachhinein mittels Scansprays erreicht werden. PEEK hat in diesem Zusammenhang im Rahmen der Erfindung den Vorteil, keine spezielle Nachbehandlung zur Vermeidung einer übermäßigen Reflektivität zu benötigen.

Um eine besonders präzise Überlagerung von Scandaten und in einer Bibliothek abgelegten CAD-Daten sicherzustellen, weist der Ausrichtungshilfskörper in einer besonders bevorzugten Variante ein Erfassungsteil mit einem rotationssymmetrischen zylindrischen Abschnitt auf. Der rotationssymmetrische zylindrische Abschnitt kann sich am apikalen Ende des Erfassungsteils in Längsrichtung an den Bereich mit der geneigten Erfassungsfläche anschließen. Auf diese Weise erstreckt sich die plane Fläche, welche im ungünstigsten Falle das Zahnfleisch verletzen könnte, in größerem Abstand zum Zahnfleisch. Außerdem sind im Übergangsbereich zwischen dem rotationssymmetrischen zylindrischen Abschnitt und der Erfassungsfläche markante Strukturen gewährleistet, welche die berührungslose und/oder taktile Erfassung erleichtern.

Die auf eine Verwendung gerichtete Aufgabe wird durch die Verwendung eines Ausrichtungshilfskörpers nach einem der Ansprüche 1 bis 8 in einem Verfahren zur Erfassung, vorzugsweise mittels eines berührungslosen und/oder taktilen Verfahrens, einer Lage und Angulation eines in einem Patientenkiefer und/oder in einem Modell eingebauten Zahnimplantats/Modellanalogs gelöst.

Soweit die zu Grunde liegende Aufgabe auf einen CAD-Datensatz der eingangs genannten Art gerichtet ist, wird die Aufgabe dadurch gelöst, dass der CAD-Datensatz zur Kennzeichnung eines Ausrichtungshilfskörpers nach einem der Patentansprüche 1 bis 8 ausgelegt ist.

Schließlich wird die auf einen Dentalscanner der eingangs genannten Art gerichtete Aufgabe dadurch gelöst, dass der CAD-Datensatz zur Kennzeichnung eines Ausrichtungshilfskörpers nach einem der Patentansprüche 1 bis 8 ausgebildet ist.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: perspektivische Ansicht von schräg oben auf einen Ausrichtungshilfskörper in einer bevorzugten Ausgestaltung der Erfindung;
- Figur 2:: Seitenansicht in Richtung des Pfeils II in Figur 1 auf den erfindungsgemäßen Ausrichtungshilfskörper gemäß Figur 1;
- Figur 3:: schematische Gegenüberstellung möglicher Einbausituationen von Ausrichtungshilfskörpern gemäß dem Stand der Technik und eines Ausrichtungshilfskörpers gemäß einer bevorzugten Ausgestaltung der Erfindung;
- Figur 4:: perspektivische Ansicht auf einen Ausrichtungshilfskörper gemäß einer weiteren Ausgestaltungsform der Erfindung im Zusammenwirken mit einem Schraubendreher.

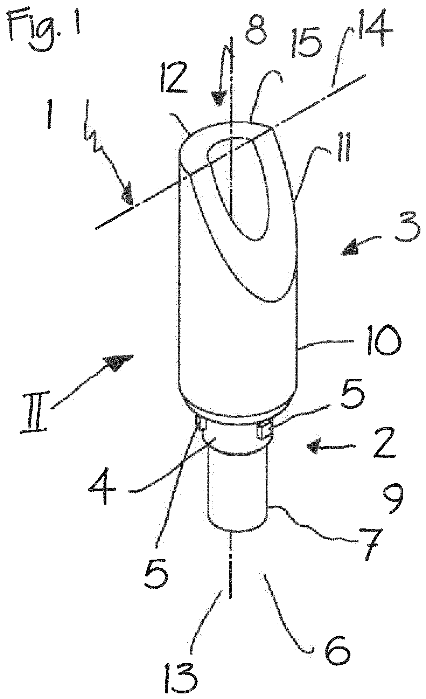

Die Figur 1 zeigt in einer perspektivischen Ansicht von schräg oben eine erste bevorzugte Ausgestaltungsform eines Ausrichtungshilfskörpers 1 gemäß der Erfindung. Der Ausrichtungshilfskörper 1 umfasst ein Verbindungsteil 2 und ein sich in koronaler Richtung an das Verbindungsteil 2 anschließendes Erfassungsteil 3.

Das Verbindungsteil 2 weist eine Schnittstelle 4 auf, mit welcher der Ausrichtungshilfskörper 1 mit einem Zahnimplantat in geometrisch definierter Weise verbunden werden kann. Die Schnittstelle 4 ist dabei passend zu einer entsprechenden Verbindungsstelle auf Seiten eines in der Figur 1 nicht gezeigten Zahnimplantats ausgeformt. Die Schnittstelle 4 des Ausrichtungshilfskörpers 1 am Verbindungsteil 2 ist durch in Umfangsrichtung der zylindrischen Schnittstelle 4 auf dessen Mantelfläche ausgeformte Nocken 5 mit quadratischem Querschnitt ausgestaltet. An die Schnittstelle 4 des Verbindungsteils 2 schließt sich am apikalen Ende 6 ein hohlzylindrischer Einfügeabschnitt 7 an. Der Einfügeabschnitt 7 ist konzentrisch zu der Schnittstelle 4 ausgebildet, jedoch mit geringerem Durchmesser.

In Richtung eines koronalen Endes 8 des Ausrichtungshilfskörpers 1 gemäß Figur 1 schließt sich an die Schnittstelle 4 des Verbindungsteils 2 das Erfassungsteil 3 an. Das Erfassungsteil 3 weist eine hohlzylindrische Grundform auf, wobei ein Durchmesser der zylindrischen Grundform des Erfassungsteils 3 größer ist als der Durchmesser der Schnittstelle 4.

Ein ringförmiger Stufenabschnitt 9 im Übergangsbereich zwischen dem Einfügeabschnitt 7 und der Schnittstelle 4 des Verbindungsteils 2 dient beim Einsetzen in ein in der Figur 1 nicht dargestelltes Zahnimplantat zur Fixierung in axialer Richtung des Ausrichtungshilfskörpers 1. Die Nocken 5 der Schnittstelle 4 dienen demgegenüber zur Verbindung des Verbindungsteils 2 mit dem nicht dargestellten Zahnimplantat in einem definierten Winkel.

Am apikalen Ende des Erfassungsteils 3 weist dieses einen rotationssymmetrischen zylindrischen Abschnitt 10 auf. In Richtung zum koronalen Ende 8 des Erfassungsteils 3 schließt sich an den zylindrischen Abschnitt 10 ein Abschnitt an, welcher eine plane Erfassungsfläche 11 aufweist. Am koronalen Ende 8 des Erfassungsteils 3 schließt das Erfassungsteil 3 mit einer planen Deckelfläche 12 ab.

Die plane Deckelfläche 12 ist senkrecht zur zentralen Längsachse 13 des Ausrichtungshilfskörpers 1 ausgerichtet. Die plane Erfassungsfläche 11 ist zu der planen Deckelfläche 11 geneigt angeordnet. Daher schneidet die plane Erfassungsfläche 11 die plane Deckelfläche 12 in einer Schnittlinie 14. Die Schnittlinie 14 begrenzt die plane Deckelfläche 12.

Konzentrisch zu der zentralen Längsachse 13 des Ausrichtungshilfskörpers 1 weist der Ausrichtungshilfskörper 1 eine Innenbohrung 15 auf. Die Innenbohrung 15 kann als Schraubenkanal ausgestaltet sein. Die Innenbohrung 15 durchdringt am koronalen Ende 8 des Erfassungsteils 3 die plane Deckelfläche 12 und verläuft durch das Verbindungsteil 2, um das Durchführen einer in Figur 1 nicht dargestellten Schraube zum Zwecke der schraubenden Befestigung an dem nicht dargestellten Zahnimplantat zu ermöglichen. Zweckmäßig verjüngt sich der Durchmesser der Innenbohrung 15 vorzugsweise im Übergangsbereich zwischen dem Erfassungsteil 3 und dem Verbindungsteil 2, um eine ringförmige Anschlagfläche für einen Schraubenkopf zu schaffen. Dies ist in den Figuren nicht dargestellt und dem Fachmann für sich genommen wohlbekannt.

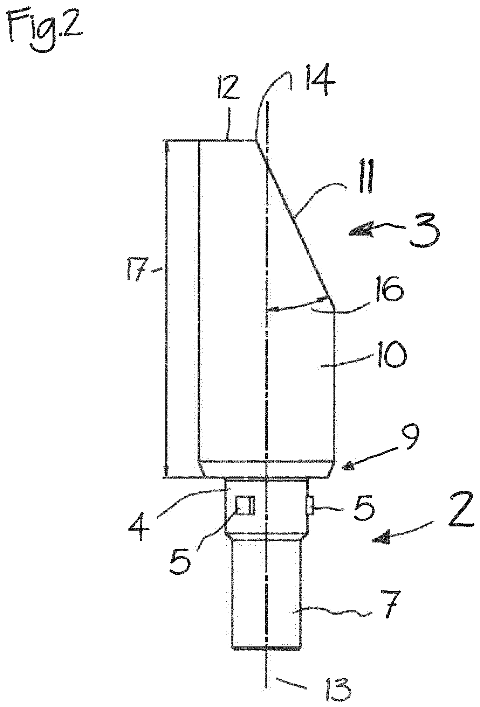

Die Figur 2 zeigt eine seitliche Projektionsansicht in Richtung des Pfeils II aus Figur 1 auf den Ausrichtungshilfskörper 1 gemäß Figur 1. Wie in Figur 2 besonders gut zu erkennen, beträgt der Winkel 16 zwischen der zentralen Längsachse 13 des Ausrichtungshilfskörpers 1 und der planen Erfassungsfläche 11 25°. Der zylindrische Abschnitt 10 des Erfassungsteils 3 erstreckt sich in axialer Richtung des Erfassungsteils 3 um etwa ein Drittel einer axialen Gesamtausdehnung 17 des Erfassungsteils 3. Wie weiter besonders gut in Figur 2 zu erkennen, verläuft die zentrale Längsachse 13 des Ausrichtungshilfskörpers 1 außerhalb der Deckefläche 12 des Erfassungsteils 3. Aufgrund dessen ist die als Schraubenkanal fungierende Innenbohrung 15 im Bereich des koronalen Endes 8 des Erfassungsteils 3 in einem Bereich axial geöffnet.

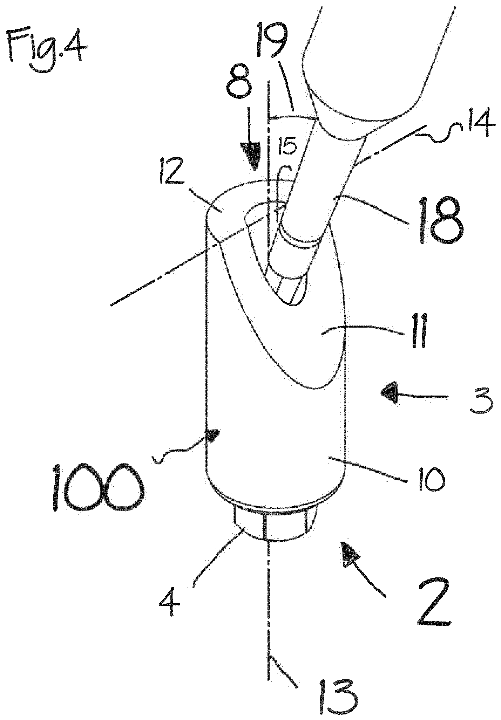

Die Figur 4 zeigt in perspektivischer Ansicht einen Ausrichtungshilfskörper 100 in einer weiteren Ausgestaltungsform. Der Aufbau des Ausrichtungshilfskörpers 100 gemäß Figur 4 entspricht im Wesentlichen jenem des Ausrichtungshilfskörpers 1 gemäß Figur 1. Jedoch ist die Schnittstelle 4 des Verbindungsteils 2 als Sechskant ausgestaltet.

In Figur 4 ist besonders gut zu erkennen, dass die Erfassungsfläche 11 relativ zu der Deckelfläche 12 derart positioniert ist, dass die zentrale Längsachse 13 außerhalb der Deckelfläche 12 verläuft. Dies führt mit Vorteil zu einer Öffnung der Innenbohrung 15 in radialer Richtung am koronalen Ende 8 des Ausrichtungshilfskörpers 100, sodass mit Vorteil das Ansetzen eines Schraubendrehers 18 in einem Neigungswinkel 19 zu der zentralen Längsachse 13 ermöglicht ist. Dies ist bei bestimmten Einbaulagen des Zahnimplantats beim Einsetzen des Ausrichtungshilfskörpers von entscheidendem Vorteil.

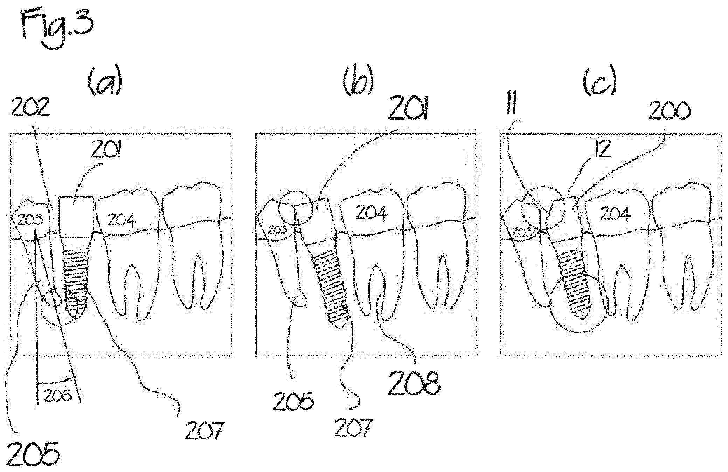

Die Figur 3 veranschaulicht schematisch Vorteile beim Einsatz einer dritten Ausgestaltung eines erfindungsgemäßen Ausrichtungskörpers im Vergleich zu Ausrichtungshilfskörpern gemäß dem Stand der Technik. Zu erkennen sind in einer rein schematischen Seitenansicht eine Einbausituationen (a) eines Ausrichtungshilfskörpers 201 gemäß Stand der Technik, im Figurenteil (b) eine alternative Einbausituation des Ausrichtungshilfskörpers 201 gemäß Stand der Technik in einer anderen Einbausituation. Schließlich zeigt Figurenteil (c) die gleiche Situation und unter Einsatz des Ausrichtungshilfskörpers 200 in einer dritten Ausgestaltung der vorliegenden Erfindung.

Im Einzelnen zeigt Fig. 3(a) eine Situation im Mundraum, bei der eine Zahnlücke 202 zwischen zwei Zähnen 203, 204 durch einen Zahnersatz zu schließen ist. Dabei verläuft eine Zahnwurzel 205 des Zahns 203 links von der Zahnlücke 202 in einem Winkel 206 zur Flächennormalen des Gaumens. In der in Figur 3(a) gezeigten Situation ist ein schematisch zu erkennendes Implantat 207 parallel zur Flächennormalen des Gaumens in den Kiefer eingebracht. Dies würde zwar die Einbringung des Ausrichtungshilfskörpers 201 gemäß Stand der Technik ermöglichen. Jedoch wäre die Positionierung des Implantats 207 im Kiefer ungünstig, da es zu nah an die Zahnwurzel 205 des Zahns 203 kommen würde.

Aus zahnmedizinischer Sicht sollte das Implantat 207 daher wie in Figur 3(b) gezeigt in den Kiefer eingesetzt werden. Denn in diesem Falle wäre der Abstand des Zahnimplantats 207 zu der Zahnwurzel 205 des Zahns 203 ebenso wie der Abstand zu der Zahnwurzel 208 des Zahns 204 optimiert. Jedoch würde in dieser Ausrichtung des Zahnimplantats 207 der Ausrichtungshilfskörper 201 gemäß dem Stand der Technik mit dem Zahn 203 kollidieren.

Daher ist es wie in Figur 3(c) skizziert bei der zahnmedizinisch optimalen Orientierung des Implantats 207 vorteilhaft, wenn ein Ausrichtungshilfskörper 200 gemäß einer dritten Ausgestaltung der Erfindung eingesetzt wird, welcher eine Erfassungsfläche 11 aufweist, die zu der Deckelfläche 12 geneigt ist, wobei die zentrale Längsachse 13 des Ausrichtungshilfskörpers 200 aufgrund des Verlaufs der Schnittlinie zwischen der Erfassungsfläche 11 und der Deckelfläche 12 außerhalb der Deckelfläche 12 verläuft. Denn wie in Figur 3(c) zu erkennen, kollidiert der Ausrichtungshilfskörper 200 aufgrund der Gestaltung der Deckelfläche und der Erfassungsfläche nicht mit dem Zahn 203.

Der Ausrichtungshilfskörper 1 wird bei Verwendung zur berührungslosen und/oder taktilen Erfassung einer Lage und Angulation eines in einem Patientenkiefer eingebauten Zahnimplantats mit dem Verbindungsteil 2 in das Zahnimplantat 207 eingesetzt. Dabei sorgt die Schnittstelle 4 mit den Nocken 5 für eine geometrisch definierte Verbindung dergestalt, dass der Ausrichtungshilfskörper 1 rotationsgesichert mit dem Zahnimplantat verbunden ist. Zur Fixierung des Ausrichtungshilfskörpers 1 mit dem Zahnimplantat wird eine Schraube durch die Innenbohrung 15, welche als Schraubenkanal fungiert, geführt. Um die Schraube, welche durch die Innenbohrung 15 des Ausrichtungshilfskörpers 1 geführt ist, nun mit dem Gewinde im Zahnimplantat zu verschrauben, wird sie, wie in Bezug auf eine andere Ausgestaltungsform des Ausrichtungshilfskörpers gemäß der Erfindung in Figur 4 veranschaulicht, mit einem Schraubendreher 18 verschraubt. Dabei kann der Schraubendreher 18 aufgrund der radialen Öffnung des Schraubenkanals mit Vorteil in einem Neigungswinkel 19 angelegt werden.

Der so montierte Ausrichtungshilfskörper 1 kann sodann mit Hilfe eines Dentalscanners nach der Erfindung erfasst werden. Dabei dienen die Erfassungsfläche 11 und die Deckelfläche 12 als scanfähige Flächen, die eine eindeutige Lage und Orientierung in Form von markanten Flächen aufweisen, die nur einmal am Ausrichtungshilfskörper 1 vorhanden sind. Die Erkennung des Ausrichtungshilfskörpers erfolgt somit mit besonders wenigen Scanartefakten. Die Geometrie des Ausrichtungshilfskörpers 1 ist als CAD-Datensatz in dem Dentalscanner in einer Bibliothek abgelegt. Der Dentalscanner führt anhand von Datenverarbeitungsmitteln einen Abgleich, ein sogenanntes matching, der gemessenen Daten des Ausrichtungshilfskörpers 1 mit dem in der Bibliothek abgespeicherten CAD-Datensatz durch, um in für den Fachmann für sich genommen bekannter Weise Lage und Angulation des Zahnimplantats im Patientenkiefer bzw. in einem Modell zu erfassen.

### BEZUGSZEICHENLISTE

- 1: Ausrichtungshilfskörper, erste Ausgestaltung
- 2: Verbindungsteil
- 3: Erfassungsteil
- 4: Schnittstelle
- 5: Nocken
- 6: apikales Ende
- 7: Einfügeabschnitt
- 8: koronales Ende
- 9: ringförmiger Stufenabschnitt
- 10: zylindrischer Abschnitt
- 11: plane Erfassungsfläche
- 12: plane Deckelfläche
- 13: zentrale Längsachse
- 14: Schnittlinie
- 15: Innenbohrung
- 16: Winkel
- 17: axiale Gesamtausdehnung
- 100: Ausrichtungshilfskörper, zweite Ausgestaltung
- 18: Schraubendreher
- 19: Neigungswinkel
- 200: Ausrichtungshilfskörper, dritte Ausgestaltung
- 201: Ausrichtungshilfskörper gemäß Stand der Technik
- 202: Zahnlücke
- 203: Zahn
- 204: Zahn
- 205: Zahnwurzel
- 206: Winkel
- 207: Implantat
- 208: Wurzel

## Patentansprüche

1. Ausrichtungshilfskörper (1, 100, 200) zur, vorzugsweise berührungslosen und/oder taktilen, Erfassung einer Lage und Angulation eines in einem Patientenkiefer implantierten Zahnimplantats (207) und/oder eines in einem Modell eingebauten Modellanalogs, umfassend ein Verbindungsteil (2) mit einer Schnittstelle (4) zum geometrisch definierten Verbinden mit dem Zahnimplantat (207) und ein mit einem koronalen Ende des Verbindungsteils (2) geometrisch definiert verbundenes Erfassungsteil (3) zum Hervorstehen in einer koronalen Erstreckungsrichtung über das Zahnimplantat (207), wobei das Erfassungsteil (3) an dessen koronalem Ende (8) eine plane Deckelfläche (12) und mindestens eine zu der Deckelfläche (12) geneigt angeordnete plane Erfassungsfläche (11) aufweist, **dadurch gekennzeichnet, dass** eine die Deckelfläche (12) in Richtung der Erfassungsfläche (11) begrenzende Schnittlinie (14) zwischen der Erfassungsfläche (11) und der Deckelfläche (12) derart verläuft, dass eine in der Erstreckungsrichtung verlaufende zentrale Längsachse (13) des Erfassungsteils (3) außerhalb der Deckelfläche (12) verläuft, wobei der Winkel (16) zwischen der Deckelfläche (12) und der Erfassungsfläche (11) von 20° bis 30°, insbesondere 25° beträgt, wobei die geneigte Erfassungsfläche (11) in axialer Richtung etwa zwei Drittel der axialen Länge des Erfassungsteils (3) erfasst, wobei
das Erfassungsteil (3) eine zu der zentralen Längsachse (13) konzentrisch verlaufende, die Deckelfläche (12) durchdringende Innenbohrung (15) zum Durchführen von Mitteln zur Befestigung des Ausrichtungshilfskörpers (1, 100, 200) an dem Zahnimplantat (207) aufweist.

2. Ausrichtungshilfskörper (1, 100, 200) nach Anspruch 1, **dadurch gekennzeichnet, dass** das Erfassungsteil (3) eine im Wesentlichen zylindrische Grundform aufweist.

3. Ausrichtungshilfskörper (1, 100, 200) nach einem der vorhergehenden Ansprüche, **dadurch gekennzeichnet, dass** das Verbindungsteil (2) integral mit dem Erfassungsteil (3) ausgeformt ist.

4. Ausrichtungshilfskörper (1, 100, 200) nach einem der vorhergehenden Ansprüche, **dadurch gekennzeichnet, dass** das Erfassungsteil (3) aus einem anderen Werkstoff hergestellt ist als das Verbindungsteil (2).

5. Ausrichtungshilfskörper (1, 100, 200) nach einem der vorhergehenden Ansprüche, **dadurch gekennzeichnet, dass** das Erfassungsteil (3) und/oder das Verbindungsteil (2) aus einem, insbesondere metallischen und/oder polymeren, fräsbaren und druckbaren Werkstoff hergestellt ist.

6. Ausrichtungshilfskörper (1, 100, 200) nach einem der vorhergehenden Ansprüche, **dadurch gekennzeichnet, dass** das Erfassungsteil (3) einen rotationssymmetrischen zylindrischen Abschnitt (10) aufweist.

7. Verwendung eines Ausrichtungshilfskörpers (1, 100, 200) nach einem der Ansprüche 1 bis 6 in einem Verfahren zur, vorzugsweise berührungslosen und/oder taktilen, Erfassung, einer Lage und Angulation eines in einem Patientenkiefer implantierten Zahnimplantats (207) und/oder eines in einem Modell eingebauten Modellanalogs.

8. CAD-Datensatz zur Kennzeichnung eines Ausrichtungshilfskörpers (1, 100, 200) nach einem der Patentansprüche 1 bis 6.

9. Dentalscanner zur digitalen Form-, Lage- und Angulierungsdatenerfassung im zahnmedizinischen Bereich, mit wenigstens einem Handgerät, das zum Erfassen von digitalen Form-, Lage- und Angulierungsdaten mindestens eines an einem in einem Patientenkiefer implantierten Zahnimplantat (207) befestigten und/oder in einem Modellanalog eingebauten Ausrichtungshilfskörpers (1, 100, 200) mittels Handhabung durch einen Bediener ausgebildet ist, einem elektronischen Auswertemodul, das mit dem wenigstens einen Handgerät verbunden und zum Erzeugen eines digitalen Form-, Lage- und Ausrichtungsdatenmodells basierend auf den erfassten digitalen Form-, Lage- und Ausrichtungsdaten des mindestens einen Ausrichtungshilfskörpers (1, 100, 200) eingerichtet ist, wobei eine Datenspeichereinrichtung, in welcher mindestens ein CAD-Datensatz zur Kennzeichnung des Ausrichtungshilfskörpers (1, 100, 200) abgelegt ist, sowie Datenverarbeitungsmittel zum Abgleichen der erfassten Formdaten mit dem CAD-Datensatz vorgesehen sind, um die Lage und Angulation des Zahnimplantats (207) in dem Patientenkiefer und/oder des Modellanalogs in dem Modell zu bestimmen, **dadurch gekennzeichnet, dass** der CAD-Datensatz zur Kennzeichnung eines Ausrichtungshilfskörpers (1, 100, 200) nach einem der Patentansprüche 1 bis 6 ausgebildet ist.

## Claims

1. An alignment aid (1, 100, 200) for capturing a location and angulation of a dental implant (207) implanted in a patient's jaw and/or of a model analog installed in a model, preferably in a non-contacting and/or tactile manner, comprising a connecting part (2) having an interface (4) for connecting to the dental implant (207) in a geometrically defined manner and a detecting part (3) connected to a coronal end of the connecting part (2) in a geometrically defined manner for protruding above the dental implant (207) in a coronal direction of extension, the detecting part (3) comprising a flat cap surface (12) on the coronal end (8) thereof and at least one flat detecting surface (11) disposed at an angle to the cap surface (12), **characterized in that** an intersection line (14) bounding the cap surface (12) in the direction of extension of the detecting surface (11) runs between the detecting surface (11) and the cap surface (12) such that a central longitudinal axis (13) of the detecting part (3) running in the longitudinal direction runs outside of the cap surface (12), wherein the angle (16) between the cap surface (12) and the detecting surface (11) is between 20° and 30°, particularly 25°, wherein the angled detecting surface (11) takes up approximately two-thirds of the axial length of the detecting part (3) in the axial direction, wherein
the detecting part (3) comprises an inner bore (15) running concentric to the central longitudinal axis (13) and penetrating the cap surface (12) for passing through means for attaching the alignment aid (1, 100, 200) to the dental implant (207).

2. The alignment aid (1, 100, 200) according to claim 1, **characterized in that** the detecting part (3) has a substantially cylindrical basic shape.

3. The alignment aid (1, 100, 200) according to any one of the preceding claims, **characterized in that** the connecting part (2) is molded integrally with the detecting part (3).

4. The alignment aid (1, 100, 200) according to any one of the preceding claims, **characterized in that** the detecting part (3) is made of a different material than the connecting part (2).

5. The alignment aid (1, 100, 200) according to any one of the preceding claims, **characterized in that** the detecting part (3) and/or the connecting part (2) are made of a particularly metal and/or polymer, machinable and printable material.

6. The alignment aid (1, 100, 200) according to any one of the preceding claims, **characterized in that** the detecting part (3) comprises a rotationally symmetrical cylindrical segment (10).

7. The use of an alignment aid (1, 100, 200) according to any one of the claims 1 through 6 in a method for capturing a location and angulation of a dental implant (207) implanted in a patient's jaw and/or of a model analog installed in a model, preferably in a non-contacting and/or tactile manner.

8. A CAD data set for identifying an alignment aid (1, 100, 200) according to any one of the claims 1 through 6.

9. A dental scanner for digitally capturing shape, position, and angulation data in the dental field, having at least one handheld device configured to capture digital shape, position, and angulation data of at least one alignment aid (1, 100, 200) attached to a dental implant (207) implanted in a patient's jaw and/or installed in a model analog by means of manipulation by a user, an electronic evaluation module connected to the at least one handheld device and configured to generate a digital shape, position, and angulation data model based on the captured digital shape, position, and alignment data of the at least one alignment aid (1, 100, 200), wherein a data storage device in which at least one CAD data set for identifying the alignment aid (1, 100, 200) is stored and data processing means for comparing the captured shape data to the CAD data set are provided in order to determine the position and angulation of the dental implant (207) in the patient's jaw and/or of the model analog in the model, **characterized in that** the CAD data set for identifying an alignment aid (1, 100, 200) is implemented according to any one of the claims 1 through 6.

## Revendications

1. Corps d'aide à l'orientation (1, 100, 200) destiné à la détection, de préférence sans contact et/ou tactile, d'une position et d'une angulation d'un implant dentaire (207) implanté dans une mâchoire de patient et/ou d'un analogue de modèle intégré dans un modèle, comprenant une partie de liaison (2) avec une interface (4) destinée à être reliée de manière géométriquement définie à l'implant dentaire (207), ainsi qu'une partie de détection (3) reliée de manière géométriquement définie à une extrémité coronale de la partie de liaison (2), destinée à faire saillie, dans une direction d'extension coronale, au-delà de l'implant dentaire (207), la partie de détection (3) présentant, à son extrémité coronale (8), une surface de recouvrement plane (12) et au moins une surface de détection plane (11) disposée inclinée par rapport à la surface de recouvrement (12), **caractérisé en ce qu'**une ligne d'intersection (14), délimitant la surface de recouvrement (12) en direction de la surface de détection (11) entre la surface de détection (11) et la surface de recouvrement (12) s'étend de telle sorte qu'un axe longitudinal central (13) de la partie de détection (3), s'étendant dans la direction d'extension, s'étend en dehors de la surface de recouvrement (12), l'angle (16) entre la surface de recouvrement (12) et la surface de détection (11) étant de 20° à 30°, en particulier de 25°, la surface de détection inclinée (11) détectant en direction axiale environ deux tiers de la longueur axiale de la partie de détection (3),
la partie de détection (3) présentant un alésage interne (15), s'étendant de manière concentrique par rapport à l'axe longitudinal central (13), traversant la surface de recouvrement (12), destiné au passage de moyens de fixation du corps d'aide à l'orientation (1, 100, 200) sur l'implant dentaire (207).

2. Corps d'aide à l'orientation (1, 100, 200) selon la revendication 1, **caractérisé en ce que** la partie de détection (3) présente une forme de base essentiellement cylindrique.

3. Corps d'aide à l'orientation (1, 100, 200) selon l'une des revendications précédentes, **caractérisé en ce que** la partie de liaison (2) est réalisée d'une seule pièce avec la partie de détection (3).

4. Corps d'aide à l'orientation (1, 100, 200) selon l'une des revendications précédentes, **caractérisé en ce que** la partie de détection (3) est réalisée dans un matériau différent de celui de la partie de liaison (2).

5. Corps d'aide à l'orientation (1, 100, 200) selon l'une des revendications précédentes, **caractérisé en ce que** la partie de détection (3) et/ou la partie de liaison (2) est/sont réalisée(s) dans un matériau, en particulier métallique et/ou polymère, usinable par fraisage et imprimable.

6. Corps d'aide à l'orientation (1, 100, 200) selon l'une des revendications précédentes, **caractérisé en ce que** la partie de détection (3) présente une partie cylindrique à symétrie de rotation (10).

7. Utilisation d'un corps d'aide à l'orientation (1, 100, 200) selon l'une des revendications 1 à 6 dans un procédé de détection, de préférence sans contact et/ou tactile, d'une position et d'une angulation d'un implant dentaire (207) implanté dans une mâchoire de patient et/ou d'un analogue de modèle intégré dans un modèle.

8. Jeu de données CAO destiné à la caractérisation d'un corps d'aide à l'orientation (1, 100, 200) selon l'une des revendications 1 à 6.

9. Scanner dentaire destiné à l'acquisition numérique de données de forme, de position et d'angulation dans le domaine de médecine dentaire, comprenant au moins un dispositif portatif conçu pour acquérir, par manipulation par un opérateur, des données numériques de forme, de position et d'angulation d'au moins un corps d'aide à l'orientation (1, 100, 200) fixé à un implant dentaire (207) implanté dans une mâchoire de patient et/ou intégré dans un analogue de modèle, un module électronique d'évaluation relié audit au moins un dispositif portatif et configuré pour générer un modèle numérique de données de forme, de position et d'orientation sur la base des données numériques de forme, de position et d'orientation acquises dudit au moins un corps d'aide à l'orientation (1, 100, 200), une unité de stockage de données dans laquelle est enregistré au moins un jeu de données CAO destiné à la caractérisation du corps d'aide à l'orientation (1, 100, 200), ainsi que des moyens de traitement de données destinés à comparer les données de forme acquises avec le jeu de données CAO afin de déterminer la position et l'angulation de l'implant dentaire (207) dans la mâchoire du patient et/ou de l'analogue de modèle dans le modèle, **caractérisé en ce que** le jeu de données CAO destiné à la caractérisation d'un corps d'aide à l'orientation (1, 100, 200) est réalisé selon l'une des revendications 1 à 6.
